# EUROPÄISCHE PATENTSCHRIFT

(11) **EP 0 611 447 B1**
(45) Veröffentlichungstag und Bekanntmachung des Hinweises auf die Patenterteilung: **29.04.1998**
(21) Anmeldenummer: 93920693.4
(22) Anmeldetag: 06.09.1993
(51) Int. Cl.: G01N 1/28, F25D 3/10, F26B 5/06, F17C 3/08

(54) **KAMMER ZUR GEFRIERTROCKNUNG DURCH KRYOSORPTION**
CHAMBER FOR FREEZE-DRYING BY CRYOSORPTION
ENCEINTE DE LYOPHILISATION PAR SORPTION CRYOGENIQUE

(30) Priorität: 08.09.1992 AT 1788/92
(43) Veröffentlichungstag der Anmeldung: 24.08.1994
(73) Patentinhaber: LEICA AG, A-1170 Wien (AT)
(72) Erfinder: SITTE, Helmuth, Prof. Dr., A-6100 Seefeld in Tirol (AT); NEUMANN, Klaus, Dr., D-66450 Bexbach-Saar (DE); EDELMANN, Ludwig, Dr., D-66424 Homburg-Saar (DE); HÄSSIG, Helmut, D-66424 Homburg-Saar (DE); KLEBER, Heinrich, A-1210 Wien/Strebersdorf (AT)
(74) Vertreter: Stamer, Harald, Dipl.-Phys.
(86) Internationale Anmeldenummer: EP9302409
(87) Internationale Veröffentlichungsnummer: WO9405996

(56) Entgegenhaltungen:
- DE-A- 2 739 796
- US-A- 4 306 425
- GIT LABOR-MEDIZIN, Nr.5, 1087, Darmstadt, DE, Seiten 199-208; H. Sitte et al.: "Ein Instrument zur Kryosubstitution und Tieftemperatur-Einbettung"

## Beschreibung

Die Erfindung betrifft eine Einrichtung zur Gefriertrocknung durch Kryosorption mit einer Kühlung durch Flüssigstickstoff, gemäß dem Oberbegriff des Patentanspruchs 1.

Zur Darstellung der Feinstrukturen biologischer Proben im Licht- oder Elektronenmikroskop, insbesondere für histochemische Untersuchungen wird in zunehmendem Umfang die Gefriertrocknung (hinfort "GT") eingesetzt. Hierzu werden die Proben ohne weitere Vorbehandlung extrem rasch eingefroren ("Kryofixation") und anschließend vorzugsweise im Vakuum bei Temperaturen um -80°C getrocknet (vgl.hierzu u.a.H.D.Coulter und L.Terracio, Anat.Rec.187, 477-494, 1960; V.Hanzon und L.H.Hermodsson, Ultrastruct.Res.4, 332-348, 1960; F.D.lngram und M.J.lngram, Scanning Electron Microscopy, IV, 147-160, 1980; J.G.Linner et al, J.Histochem.Cytochem.34, 1123-1135, 1986; J.D.Mellor, Fundamentals of freeze-drying, Academic Press, London, 1978; H.T.Meryman in H.T.Meryman, Editor, Cryobiology, Academic Press, Sn. 609-663, 1966; K.Neumann, Grundriß der Gefriertrocknung, Musterschmidt-Verlag, Göttingen, 1952; in allen angeführten Publikationen findet sich weiterführende Fachliteratur). Nach dem zitierten Stand der Technik geschieht dies zumeist in Systemen, deren Vakuum mit einem zweistufigen Pumpaggregat (rotierende Vorvakuum- mit Diffusions-Hochvakuumpumpe) oder einstufig mit einer Turbomolekularpumpe erzeugt wird, in Verbindung mit einer externen Kühlung der Proben und Kondensationsflächen mit Flüssigstickstoff (hinfort "LN2"). Abgesehen von dem erheblichen apparativen Aufwand entstehen hierbei sehr hohe laufende Betriebskosten, da die meisten handelsüblichen oder Labor-Anlagen über 1 I LN2/h brauchen und da auch die GT kleiner Proben mit Durchmesser <1 mm durchschnittlich etwa 14 Tage in Anspruch nimmt. Abgesehen von der störenden Geräuschbelästigung durch die kontinuierlich laufenden rotierenden Pumpen, die einen Betrieb derartiger GT-Systeme in einem normalen Arbeitsraum kaum zulassen, stört insbesondere der hohe Arbeitsaufwand, der mit dem häufigen Nachfüllen von LN2 auch in Nachtstunden und über das Wochenende verbunden ist und häufig durch nicht eingestandene Unterlassungen zu schwer aufklärbaren Mißerfolgen führt. Jeder Versuch, diese LN2-Nachfüllungen zu automatisieren, erhöht den Investitionsaufwand nochmals erheblich. Schließlich besteht ein wesentlicher zusätzlicher Nachteil der diskutierten Systeme darin, daß alle rotierenden Pumpen und Diffusionspumpen Öldämpfe freisetzen, die sich an den kalten Objektoberflächen niederschlagen und diese dadurch artefaktiv verändern.

Aus der US 4 306 425 und dem Artikel GTI-LABOR-MEDIZIN, Nr. 5, 1087, Darmstadt, DE, Seiten 199-208; H. Sitte et al.: "Ein Instrument zur Kryosubstitution und Tieftemperatur-Einbettung" betreffen Einrichtungen, bei denen die Proben in einer Flüssigkeit, z.B. Äthanol, Methanol behandelt werden. Im Gegensatz zur Gefriertrocknung wird dabei das in der Probe enthaltene Wasser gegen ein anderes Medium ausgetauscht. In der Praxis werden die beiden Methoden "Substitution" und "Gefriertrocknung" zwar im Vergleich angewendet. Es sind jedoch zur Probenbehandlung zwei völlig verschieden ausgebildete Einrichtungen notwendig.

Es wurde daher mehrfach versucht, Kryosorptions-Systeme zum Erzeugen eines sauberen ölfreien Hochvakuums einzusetzen (vgl. hierzu u.a.Deutsche Patentschrift DE 27 39 796 sowie L.Edelmann, Mikroskopie, Wien, 35, 31-36, 1979; L.Edelmann, Scanning Electron Microscopy, IV, 1377-1356, 1986; dortselbst weitere Literaturhinweise). Das von Edelmann entwickelte und eingesetzte System besteht aus einem teilbaren zylindrischen Behälter mit einem Volum von etwa 0,5 Liter, der vakuumdicht mit einem Rohr verbunden ist, dessen freies Ende mit einem Ventil und einem Schlauchanschluß bestückt ist. Im Unterteil des Behälters befindet sich ein Molekularsieb als Trockenmittel. Im Oberteil ist der thermostatisch beheizbare Teller zur Aufnahme der gefrorenen Proben befestigt. Beide Teile werden nach Einfüllen des Molekularsiebes und Beschicken des Probentellers mit den gefrorenen Objekten vakuumdicht miteinander verschraubt. Anschließend wird der Behälter in ein LN2-gefülltes Dewargefäß eingebracht. Da nun alle Wandflächen des Behälters direkt mit LN2 (Temperatur -196°C) in Kontakt stehen, kühlt sich auch das Molekularsieb ab und adsorbiert den Großteil der im Behälter vorhandenen Gasmolekel (O₂, N₂, CO₂, H₂O). Es resultiert je nachdem, ob und in welchem Umfang die Edelgase mit einer Vorvakuumpumpe abgesaugt wurden oder nicht, ein Vakuum zwischen 0.133 Pa und 1.33*10⁻³ Pa (10⁻³ und 10⁻⁵ Torr), das im Hinblick auf die hiemit gegebene mittlere freie Weglänge der H₂O-Molekel für eine effiziente GT vollkommen ausreicht. Die Situation wird zusätzlich dadurch verbessert, daß sich H₂O an den durch LN2 direkt gekühlten Kammerwänden dauerhaft niederschlägt und daß der entscheidende Wasserdampf-Partialdruck dieser Anordnung hierdurch fast unmeßbar klein wird. Ein besonderer Vorteil der beschriebenen Anordnung besteht schließlich darin, daß der LN2-Verbrauch des Systems unter 1 I LN2/Tag liegt, sodaß eine Trocknung über 14 Tage in einem 35-Liter-Dewargefäß ohne LN2-Nachfüllung und vollkommen geräuschlos durchgeführt werden kann.

Den aufgeführten Vorteilen der Kryosorptions-GT nach Edelmann stehen Nachteile gegenüber, die einem Routine-Einsatz entgegenstehen. Hierzu zählen zunächst die komplizierte Beschickung der Kammer mit dem Molekularsieb und den gefrorenen Proben. Das Molekularsieb nimmt bei tiefen Temperaturen und zunächst offenem Behälter sofort Gase auf und büßt hierdurch Kryosorptions-Kapazität ein. Der Verschluß der zweiteiligen Kammer ist sehr schwierig und erfordert große Kräfte, da nur harte Dichtungsringe, vorzugsweise Metalldichtungen, im Temperaturbereich ←180°C geeignet sind. Es ist sehr schwierig, die korrekte Lage der Proben in den Mulden des Probentellers während dieser Prozedur zu sichern. Schließlich ist jede Sichtkontrolle sowie UV-Polymerisation in diesem System unmöglich. Alle angeführten Probleme gelten ebenso, z.T. in verstärktem Umfang, für die Entnahme der Proben, welche durch die GT extrem hygroskopisch geworden sind.

Angesichts der unbestreitbaren Vorteile eines Kryosorptions-Systemes für die GT besteht die Aufgabe der vorliegenden Erfindung darin, eine Anordnung zu schaffen, welche die Vorteile des Edelmann-Behälters ohne dessen Nachteile voll zur Geltung bringt und damit ohne Einschränkungen für den Routine-Einsatz tauglich ist.

Erfindungsgemäß wird diese Aufgabe durch Ausgestaltung des Edelmann-Konzeptes entsprechend dem kennzeichnenden Teil des Anspruches 1 gelöst. Die erfindungsgemäße Anordnung weist hierzu eine Kühlung auf, welche einseitig auf die Bodenfläche eines Behälters in bekannter Weise so erfolgt, daß diese Bodenfläche mit einer komplementär ausgebildeten Fläche an der Oberseite eines LN2-gekühlten Festkörpers korrespondiert, der sich in einem Dewargefäß befindet, wobei die Höhe des LN2-Spiegels im Dewargefäß aufgrund des Materialquerschnittes und des Wärmeleitvermögens dieses Festkörpers keinen nennenswerten Einfluß auf die Temperatur der Kontaktfläche ausübt, die in der Regel höchstens um 20°C von der LN2-Temperatur (-196°C) differiert. Der Boden der GT-Kammer ist vorzugsweise ein Teil eines Drehstückes aus einem Metall guter Wärmeleitung (z.B. Messing oder Aluminium), das eine Kammer zur Aufnahme eines Trockenmittels (z.B.Molekularsieb "Zeolith") sowie an seiner Oberseite eine Vertiefung für den Teller zur Aufnahme der gefrorenen Proben aufweist. Die Kammer für das Trockenmittel weist zumindest eine Verbindung zur Gefriertrocknungskammer, im Bedarfsfall zusätzlich eine vakuumdicht verschließbare Öffnung zum Einfüllen und Austausch des Trockenmittels auf. Die Seitenwand der Kammer wird durch eine vorzugsweise zylindrische Hülse aus einem schlecht wärmeleitenden dünnwandigen Metallblech (z.B.Edelstahlblech in Stärke von etwa 0,2 bis 1 mm bei einer Höhe >100 mm) gebildet, die an ihrem unteren Ende vakuumdicht mit dem angeführten Drehteil, an ihrem oberen Rand ebenfalls vakuumdicht mit einem Ring aus gut wärmeleitendem Metall verbunden ist. Die Position der Kammer und die Höhe ihrer Seitenwand ist so bemessen, daß zumindest ihr oberster Abschnitt mit dem Abschlußring aus dem Hals des Dewargefäßes herausragt und sich daher unter normalen Betriebsbedingungen während der GT auf einer Temperatur befindet, die jedenfalls über dem Taupunkt einer normalen Raumluft liegt. Auf diese Weise ist es möglich, den Verschlußdeckel über der Öffnung im oberen Abschlußring der Kammer mit einem handelsüblichen O-Ring abzudichten. Gleiche Bedingungen gelten für einen normalen Vakuumanschluß (z.B.Normflansch), der vorzugsweise im Bereich der Kammer, der aus dem Dewargefäß herausragt, beispielsweise wiederum am oberen Abschlußring angeordnet sein kann und den GT-Kammerraum mit der Raumatmosphäre verbindet. An ihn können beliebige handelsübliche Vakuumbausteine (z.B.Vakuumeter, Ventile, Schlauchanschlüsse für Vorvakuumpumpen usw.) angeschlossen werden. Zur Aufnahme und thermostatischen Beheizung der gefrorenen Proben kann ein Teller in der Vertiefung an der Oberseite des Boden-Drehstückes der Kammer vorgesehen werden, der eine Heizpatrone und einen Temperatursensor zur thermostatischen Beheizung sowie an seiner Oberseite zumindest eine Mulde zur Aufnahme der gefrorenen Proben aufweist. Die Montage dieses Tellers am Bodendrehteil erfolgt vorzugsweise über Punkt- oder Linienauflagen dergestalt, daß zwischen dem tiefgekühlten Drehteil (←176°C) und dem zur GT normalerweise auf etwa -80°C erwärmten Probenteller nur ein minimaler Wärmekontakt resultiert.

Ausgestaltungen der Erfindungen können beispielsweise darin bestehen, daß am Bodendrehteil zusätzliche Kühlflächen angeschraubt oder angelenkt werden können, welche die Bindung von H₂O erhöhen, sowie daß die Kammer zur dauerhaften Gewährleistung eines von Manipulationskräften unbeeinflußbaren Wärmekontaktes zwischen der Bodenfläche der Kammer und der komplementären Festkörperoberfläche im Dewargefäß mit dem Dewargefäß oder einem am Dewargefäß befestigten Montageteil verschraubt ist, wobei eine durch Federelemente vorgespannte Schraubverbindung erfindungsgemäß Längenänderungen der gekühlten Teile kompensieren kann.

Weitere Ausgestaltungen können darin bestehen, daß Ventile ein Absperren der Kammer mit dem Trockenmittel im Bodenteil, sowie ein Öffnen einer Verbindung zum Innenraum des Dewargefäßes und damit ein Fluten der GT-Kammer mit trockenem kalten Stickstoffgas (hinfort "GN2") bewirken, wobei das erste Ventil gleichzeitig als Überdruckventil ausgebildet sein kann und den Benützer dadurch vor einer spontanen Freisetzung von adsorbierten Gasen nach langen Trockenperioden beim Aufwärmen der Kammer nach Verdampfen der letzten LN2-Reste aus dem Dewargefäß schützt, die ohne besondere Vorkehrung zu einer Explosion des Bodenteiles führen kann.

Weitere Ausgestaltungen können darin bestehen, daß zusätzliche Vakuumanschlüsse, sowie ein weiteres Ventil mit einem nachgeschalteten Schlauchanschluß zum Vorevakuieren des Kammerraumes zum Entfernen des Großteils der Edelgase vorgesehen werden, sowie daß der Deckel zum Verschluß der oberen Kammeröffnung aus einem durchsichtigen und/oder UV-durchlässigen Material besteht, sowie daß der obere Abschlußring und die vorgesehenen Ventile für den Fall eines längeren Flutens der Kammer mit trockenem kalten GN2 zumindest eine Heizpatrone und einen Temperatursensor aufweisen, die eine thermostatische Beheizung dieser Elemente als Schutz gegen eine störende Abkühlung ermöglichen.

Weitere Vorteile und Merkmale der Erfindung ergeben sich aus der nachfolgenden Beschreibung bevorzugter Ausführungsbeispiele anhand der Zeichnungen.
Fig. 1a zeigt eine schematische Aufsicht und
Fig. 1b einen schematischen teilweisen Schnitt durch die Gesamtanordnung, bestehend aus dem Dewargefäß mit dem ortsfesten Einsatz und der hierauf gesetzten GT-Kammer einschließlich eines weiteren Aufsatzes mit einem UV-Strahler zur UV-Polymerisations-Einbettung in der Kammer,
Fig. 2 zeigt die gleiche GT-Kammer im Detail im schematischen Schnitt.

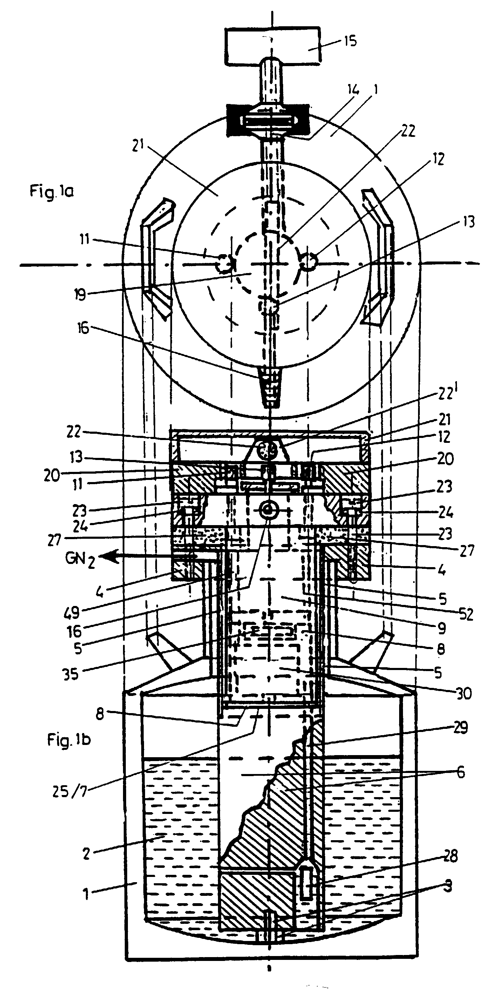

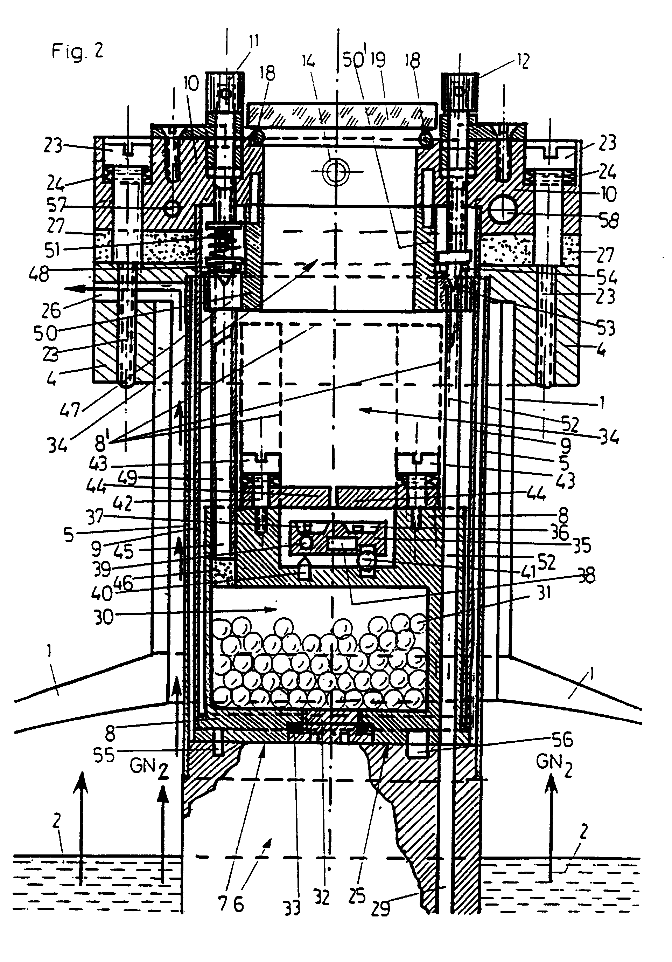

Die erfindungsgemäße Kammer zur GT durch Kryosorption nach Fig. 1a und 1b wird nach dem Stand der Technik in ein Dewargefäß 1 mit einer Füllung aus LN2 2 eingesetzt, das einen Einsatz 6 enthält, beispielsweise einen an einem Bolzen 3 am Dewarboden, sowie am Abschlußring 4 des Gefäßes 1 über eine Hülse 5 aus dünnwandigem Edelstahlblech abgestütztem Aluminiumzylinder 6 (Materialquerschnitt >10 cm²), dessen vorzugsweise plane obere Begrenzungsfläche 7 weitgehend unabhängig vom LN2-Füllstand andauernd eine Temperatur aufweist, welche maximal um 20°C von der LN2-Temperatur (-196°C) differiert. Die erfindungsgemäße GT-Kammer besteht vorzugsweise aus einem Drehteil 8, dessen Bodenfläche 25 mit der Oberfläche 7 des Metallkörpers 6 komplementär korrespondiert und durch den guten thermischen Kontakt bei vorhandener LN2-Füllung des Gefäßes 1 eine Temperatur unter -176°C aufweist. An seinem unteren Rand ist der Drehteil 8 mit einer vorzugsweise zylindrischen Hülse 9 aus dünnem Metallblech geringer Wärmeleitung (z.B. Edelstahlblech in Stärke 0,2 bis 1 mm, Höhe >100 mm) vakuumdicht verbunden, deren oberer Rand aus dem Hals des Dewargefäßes 1 herausragt und vorzugsweise vakuumdicht mit einem Ring 10 aus einem gut wärmeleitenden Metall verbunden ist. Vorzugsweise an diesem Ring 10 können Ventile mit den Bedienungsknöpfen 11, 12 und 13, sowie ein Vakuumanschluß, beispielsweise ein Normflansch 14 zum Anschluß einer Meßröhre 15 zur Vakuummessung oder anderer handelsüblicher Vakuumbausteine und/oder ein Schlauchanschluß zum Vorevakuieren der GT-Kammer angeordnet sein. Die Öffnung des Ringes 10 kann mit einem Deckel 19 und dem O-Ring 18 vakuumdicht verschlossen werden. Auf den Ring 10 kann, beispielsweise über das Zwischenelement 20 ein Gehäuse 21 für den UV-Strahler 22 mit Reflektor 22' aufgesetzt werden, der in der Kammer eine UV-Polymerisation ermöglicht (vgl. hierzu E.Carlemalm et al, in M.Müller et al, Herausgeber, The Science of Biological Specimen Preparation, IV, 147 ff, SEM Inc. Chikago, 1986; dortselbst weiterführende Literatur). Die Kammer 8,9,10,18,19 kann zur Absicherung gegen die betriebstypischen Manipulationskräfte und ein dadurch ausgelöstes Verkippen durch eine zusätzliche Verbindung, beispielsweise eine Schraubverbindung mittels der Stehbolzen 23 gesichert werden, die im Abschlußring 4 am Hals des Dewargefäßes 1 verankert sind und gegebenenfalls durch eine Federung (z.B. Tellerfedern 24) den kraftschlüssigen Kontakt der korrespondierenden Flächen 7/25 und damit den erforderlichen Wärmekontakt auch dann aufrecht erhalten, wenn die Längen verschiedener Bauteile durch Temperaturschwankungen variieren. Soweit der aus dem LN2 2 im Dewargefäß 1 entweichende GN2 ausschließlich oder überwiegend durch eine Öffnung, beispielsweise durch den Kanal 26 im Montagering 4 am Hals des Dewargefäßes 1 entweicht, kann ein Dichtungsring 27 aus flexiblem Material (z.B. Moltopren) den Eintritt feuchter Raumluft und eine hieraus resultierende Frostbildung im Hals des Dewargefäßes 1 unterbinden. Nach dem Stand der Technik kann schließlich ein Fluten der GT-Kammer mit trockenem kalten GN2 in der dargestellten Weise (vgl. Fig. 1a, 1b und 2) dadurch bewirkt werden, daß eine Heizpatrone 28 aus dem LN2 GN2 in eine Bohrung 29 des Zylinders 6 verdampft, die mit einer Bohrung bzw. einem Rohr 52, welches beispielsweise durch den Drehteil 8 verläuft, kommuniziert.

Die detaillierte Ausgestaltung der erfindungsgemäßen GT-Kammer ergibt sich aus der Darstellung in Fig. 2. Der Drehteil 8 weist eine Trockenmittelkammer 30 zur Aufnahme eines Trockenmittels 31 (z.B.Molekularsieb) auf, das beispielsweise nach Öffnen eines Deckels 32 ausgewechselt werden kann, wobei eine Dichtung (z.B. Kupferring 33) einen dauerhaften vakuumdichten Verschluß auch bei Temperaturen ←180°C gewährleistet. Am Boden der durch die Oberfläche der Teile 8,9,10,18,19 gebildeten Trockenkammer 34 befindet sich in einer Vertiefung des Drehteiles 8 der Teller 35 mit mindestens einer Mulde 36 zur Aufnahme der gefrorenen Proben 37. Der Teller 35 kann mittels einer Heizpatrone 38 und eines Temperaturfühlers 39 thermostatisch beheizt werden und steht mit der Wandung des Drehteiles 8 lediglich über Punktkontakte (z.B.Spitzenauflagen 40) oder Linienberührungen (z.B.Kugeln 41 aus schlecht wärmeleitendem Material, z.B.Glas, welche in korrespondierenden Auflagebohrungen in den Teilen 8 bzw. 35 ruhen) im Kontakt. Größere Wärmetransfers zwischen den Elementen 8 und 35 werden auf diese Weise bei Vakuumbetrieb vermieden.

Eine Ausgestaltung der Erfindung kann darin bestehen, daß zur Erweiterung der Kaltflächen des Drehteiles 8 zusätzliche Kondensationsflächen für Wasserdampf durch die gefedert (z.B.Tellerfedern 42) über Stehbolzen 43 angelenkten Elemente 44 geschaffen werden, wobei die Kontaktflächen der korrespondierenden Teile 8 und 44 im Hinblick auf einen einwandfreien Wärmekontakt beispielsweise exakt plan ausgebildet und bei Bedarf mit einer wärmeleitenden Flüssigkeit oder Paste geringen Dampfdruckes bedeckt sind. Die Kondensations-Elemente 44 können beim Einbringen wie bei der Entnahme der Proben 37 entweder seitlich weggeschwenkt oder nach Entfernen der Stehbolzen 43 gänzlich entfernt werden. Eine weitere Ausgestaltung der Erfindung kann darin bestehen, daß die Verbindung 45 mit einem Netz oder Filter 46 zum Schutz gegen einen Eintritt von Staubpartikeln (z.B. Abrieb vom Molekularsieb 31) aus der Trockenmittelkammer 30 in die Trockenkammer 34 versehen und durch ein Ventil 47/48 verschlossen werden kann, wobei der Ventilsitz 47 beispielsweise auf einem vakuumdicht mit dem Drehteil 8 verbundenen dünnwandigen Edelstahlrohr 49 befestigt und von einem gut wärmeleitenden Metallteil 50 umgeben sein kann, der in gutem Wärmekontakt mit dem oberen Abschlußring 10 steht. Das Ventil 47/48 wird durch Drehen des Knopfes 11 geöffnet oder geschlossen und übt durch die Feder (z.B. Schraubenfeder 51) in technisch bekannter Weise gleichzeitig die Funktion eines Überdruckventils aus, das sich in Grenzstellung des Knopfes 11 federnd öffnet, wenn in der Trockenmittelkammer 30 in der bereits beschriebenen Weise ein Überdruck entsteht.

Weitere Ausgestaltungen der Erfindung können darin bestehen, daß im Ring 10 in technisch bekannter Weise ein Absperrventil (Bedienungsknopf 13 in Fig. 1) mit einem nachgeschalteten Schlauchanschluß 16 (Fig. 1) zum Anschluß einer Wasserstrahl- oder Membranpumpe, welche kein Risko einführen, daß Ölniederschläge auf den gefrorenen Objekten entstehen, vorgesehen werden, sowie daß ein mit dem Drehteil 8 vakuumdicht verbundenes Edelstahlrohr 52 mit einem weiteren Ventil 53/54 vakuumdicht verbunden ist, das durch den Knopf 12 geöffnet und verschlossen werden kann, wobei der Ventilsitz 53 entsprechend dem Ventilsitz 47 durch ein Element 50' thermisch an den oberen Abschlußring 10 der Kammer angekoppelt ist und die Ventilfunktion dieses Ventils bis auf die in diesem Fall nicht erforderliche Überdrucksicherung jener des Ventils 11/47/48/50 entspricht. Das Ventil 12/53/54/50' gestattet es, die Trockenkammer 34 nach Abschluß der GT der Proben 37 mit trockenem kalten GN2 aus dem Innenraum des Dewargefäßes in der aus Fig. 1 ersichtlichen und bereits beschriebenen Weise zu fluten, wobei Orientierungshilfen (z.B. Bolzen 55/56) die erforderliche Übereinstimmung der räumlichen Lagen der kommunizierenden Röhren 29 und 52 gewährleisten. Eine flankierende Ausgestaltung besteht schließlich darin, daß der obere Abschlußring 10 mittels einer Heizpatrone 58 und eines Temperatursensors 57 thermostatisch beheizt werden kann, sodaß bei längerem Fluten der Trockenkammer 34 mit kaltem GN2 aus dem Dewar-Inneraum weder die Ventilsitze 47/53, noch der obere Abschlußring 10 in einer störenden und für den weiteren Betrieb hinderlichen Weise abgekühlt werden.

Die erfindungsgemäße GT-Kammer kann in sinngemäßer Abwandlung oder Kombination der beschriebenen Konstruktion und Ausgestaltungen in sehr unterschiedlicher Weise ausgebildet werden, ohne hierdurch ihren Erfindungscharakter einzubüßen. So ist die Art der Kühlung der Bodenfläche 25 des Teiles 8 so lange ohne Relevanz, als diese Bodenfläche in technisch bekannter Weise auf eine Temperatur abgekühlt wird, welche nach der erfindungsgemäßen Vorevakuierung durch ein Trockenmittel 31 in einer Trockenmittelkammer 30 das Erreichen eines Vakuums besser als 0.133 Pa (10⁻³ Torr) ermöglicht, wie es für eine GT zu fordern ist. Ebenso ist ohne Relevanz, wo und auf welche Weise eine Öffnung zum Befüllen bzw. Entnehmen des Trockenmittels 31 in der Trockenmittelkammer 30 vorgesehen wird. Gleiches gilt für die Ausbildung, Arbeitsweise und Anordnung der Ventile 47/48, sowie 53/54, die beispielsweise auch direkt am Drehteil 8 angeordnet, bzw. deren Achsen beispielsweise um 90° gedreht horizontal im Ring 10 statt in der Fig. 2 dargestellten Weise vertikal bewegt werden können, so daß die zusätzliche thermische Anbindung an den oberen Abschlußring entfällt. Unerheblich ist, auf welche Weise im Bedarfsfall die Oberfläche der Kaltteile zur Wasserbindung erhöht wird. Eine Altemative zu den beschriebenen zusätzlichen Kühlelementen 44 besteht beispielsweise in dem strichliert in Fig. 2 angedeuteten Hochziehen des Randes 8' des Drehteiles 8. Unerheblich ist ferner, in welcher Weise ein einwandfreier Kontakt zwischen den korrespondierenden Flächen 7 und 25 der Teile 8 und 6 gewährleistet wird, wobei die Verschraubung 23/24 ohne weiteres durch eine entsprechende Orientierung mittels eines Führungselementes für die GT-Kammer oder durch einen Klemmbügel ersetzt werden kann.

## Patentansprüche

1. Einrichtung zur Gefriertrocknung durch Kryosorption mit einer Kühlung durch Flüssigstickstoff (2), der sich in einem Dewargefäß (1) befindet, mit einem Trockenmittel (31) und mit einer Trockenkammer (34) zur Aufnahme einer Probe (37), wobei die Außenwandung der Trockenkammer (34) aus einer Metallwand (9) besteht und die Trockenkammer (34) über einen Ring (10) vakuumdicht verschließbar ausgebildet ist,
dadurch gekennzeichnet, daß
die Trockenkammer (34) großteils im Hals des Dewargefäß (1) angeordnet ist und der untere Rand der Metallwand (9) mit dem unteren Rand eines metallischen Teiles (8) vakuumdicht verbunden ist, und die Unterseite des metallischen Teils (8) eine Kontaktfläche (25) aufweist, die mit einem von Flüssigstickstoff umspülten und wärmeleitenden Körpers (6) verbunden ist, wobei das metallische Teil (8) durch den wärmeleitenden Körper (6) abgekühlt wird und das metallische Teil (8) eine Trockenmittelkammer (30) zur Aufnahme des Trockenmittels (31) für die Kryosorption, beispielsweise ein Molekularsieb, sowie einen, über ein Ventil (47/48) schaltbaren, Verbindungskanal (45) zu der Trockenkammer (34) aufweist,
und der obere Rand der Metallwand (9) mit dem Ring (10) sich außerhalb des Dewargefäßes (1) und deshalb annähemd auf Raumtemperatur befindet.

2. Einrichtung nach Anspruch 1, dadurch gekennzeichnet, daß die Metallwand (9) aus einem dünnen Blech, vorzugsweise in der Stärke von 0,2 mm bis 1 mm, besteht.

3. Einrichtung nach Anspruch 2, dadurch gekennzeichnet, daß das Blech ein Edelstahlblech ist.

4. Einrichtung nach einem der Ansprüche 1 bis 3, dadurch gekennzeichnet, daß die Höhe der Metallwand (9) mindestens 100 mm beträgt.

5. Einrichtung nach einem der Ansprüche 1 bis 4, dadurch gekennzeichnet, daß das metallische Teil (8) eine durch einen Deckel (32) vakuumdicht verschließbare Öffnung, vorzugsweise mit einer Metallringdichtung (33), zum Nachfüllen oder Austauschen von Trockenmittel (31) aufweist.

6. Einrichtung nach einem der Ansprüche 1 bis 5, dadurch gekennzeichnet, daß der Ring (10) mindestens einen Vakuumanschluß (14) zum Anschluß handelsüblicher Vakuumbauteile aufweist, wobei die Öffnung an der Oberseite des Ringes (10) vorzugsweise durch einen handelsüblichen O-Ring (18) im Verein mit einem Deckel (19) vakuumdicht verschließbar ist.

7. Einrichtung nach einem der Ansprüche 1 bis 6, dadurch gekennzeichnet, daß zur Aufnahme der gefrorenen Proben (37) ein Teller (35) aus gut wärmeleitendem Metall vorgesehen ist, der mittels einer Heizpatrone (38) sowie eines Temperaturfühlers (39) thermostatisch beheizbar ist und zur Aufnahme und Einbettung der Proben (37) an seiner Oberseite mindestens eine Mulde (36) aufweist und mit dem metallischen Teil (8) in einer Weise verbunden ist, daß zwischen dem Teller (35) und dem metallischen Teil (8) bei evakuierter Trockenkammer (34) ein hoher Wärmewiderstand resultiert.

8. Einrichtung nach Anspruch 7, dadurch gekennzeichnet, daß die Verbindung zwischen dem metallischen Teil (8) und dem Probenteller (35) über Spitzenauflagen (40) erfolgt.

9. Einrichtung nach Anspruch 7, dadurch gekennzeichnet, daß die Verbindung zwischen dem metallischen Teil (8) und dem Probenteller (35) über Kugeln geringen Wärmeleitvermögens (41), beispielsweise Glaskugeln, erfolgt, welche zu den Rändem von Aufnahmebohrungen in dem metallischen Teil (8) und dem Probenteller (35) jeweils eine Linienberührung aufweisen.

10. Einrichtung nach einem der Ansprüche 1 bis 9, dadurch gekennzeichnet, daß an der Oberseite des metallischen Teils (8) Metallteile (44) mit gutem Wärmeleitvermögen und zumindest einer planen Kontaktfläche befestigbar sind, welche mit dem metallischen Teil (8) einen guten Wärmekontakt aufweisen und zum Einbringen bzw. zur Entnahme der Proben (37) aus den Mulden (36) des Probentellers (35) entweder um die Achsen der Befestigungselemente (42,43) wegschwenkbar oder nach Lösen der Befestigungselemente (42,43) entfernbar sind.

11. Einrichtung nach einem der Ansprüche 1 bis 10, dadurch gekennzeichnet, daß die Trockenkammer (34) durch Befestigungselemente (23,24) so am Dewar (1) oder an einem ortsfest mit dem Dewar (1) verbundenen Montage-Element (Ring 4) befestigbar ist, daß unabhängig von betriebsüblich auftretenden Manipulationskräften stets ein kraftschlüssiger Kontakt zwischen den korrespondierenden Flächen (25) und (7) am metallischen Teil (8) sowie am Körper (6) gewährleistet ist.

12. Einrichtung nach Anspruch 1, dadurch gekennzeichnet, daß sich das Ventil (47/48) in der Trockenkammer (34) befindet und sich zwischen dem Ventilsitz (47) und der Oberseite des metallischen Teils (8) im Anschluß an die Verbindung in Form eines Verbindungskanals (45) ein dünnwandiges Rohr (49) aus einem Material geringer Wärmeleitung, vorzugsweise ein Edelstahlrohr mit einer Wandstärke von weniger als 0,5 mm, befindet, und daß der Ventilsitz (47) durch einen Metallteil (50) guter Wärmeleitung mit dem Ring (10) thermisch verbunden ist.

13. Einrichtung nach Anspruch 12, dadurch gekennzeichnet, daß das Ventil (47/48) durch ein Federelement (51) als Überdruckventil ausgebildet ist, das sich bei einem Überdruck in der Trockenmittelkammer (30) mit dem Trockenmittel (31) automatisch öffnet.

14. Einrichtung nach einem der Ansprüche 1 bis 13, dadurch gekennzeichnet, daß ein Ventil (53/54) vorhesehen ist, das die Trockenkammer (34) über eine Rohrleitung (52,29) mit dem Innenraum des Dewargefäßes (1) verbindet.

15. Einrichtung nach Anspruch 14, dadurch gekennzeichnet, daß der in der Trockenkammer (34) verlaufende Abschnitt (52) der Rohrleitung aus einem dünnwandigen Rohr geringer Wärmeleitung, vorzugsweise aus einem Edelstahlrohr mit Wandstärke von weniger als 0,5 mm, besteht, das mit dem metallischen Teil (8) vakuumdicht verbunden ist, und daß der Ventilsitz (53) durch einen Metallteil (50') guter Wärmeleitung mit dem Ring (10) thermisch verbunden ist.

16. Einrichtung nach einem der Ansprüche 1 bis 15, dadurch gekennzeichnet, daß der Abschlußdeckel (19) aus einem durchsichtigen Material besteht.

17. Einrichtung nach einem der Ansprüche 1 bis 16, dadurch gekennzeichnet, daß der Abschlußdeckel (19) eine hohe Durchlässigkeit für UV-Strahlen aufweist.

18. Einrichtung nach einem der Ansprüche 1 bis 17, dadurch gekennzeichnet, daß auf den Ring (10) ein UV-Strahler (20 bis 22, 22') aufsetzbar ist.

19. Einrichtung nach einem der Ansprüche 1 bis 18, dadurch gekennzeichnet, daß der Ring (10) mittels einer Heizpatrone (58) und eines Temperatursensors (57) thermostatisch beheizbar ausgebildet ist.

## Claims

1. Equipment for freeze-drying by cryosorption with a cooling by liquid nitrogen (2), which is disposed in a Dewar flask (1), with a drying means (31) and with a drying chamber (34) for reception of a sample (37), wherein the outer wall of the drying chamber (34) consists of a metal wall (9) and the drying chamber (34) is constructed to be vacuum-tightly closable by way of a ring (10), characterised thereby that the drying chamber (34) is arranged for the major part in the neck of the Dewar flask (1) and the lower edge of the metal wall (9) is vacuum-tightly connected with the lower edge of a metallic part (8), and the underside of the metallic part (8) has a contact surface (25), which is connected with a heat-conductive body (6) washed around by liquid nitrogen, wherein the metallic part (8) is cooled down by the heat-conductive body (6) and the metallic part (8) has a drying means chamber (30) for reception of the drying means (31) for the cryosorption, for example a microfilter, as well as a connecting channel (45), which is switchable by way of a valve (47/48), for the drying chamber (34), and the upper edge of the metal wall (9) together with the ring (10) is disposed outside the Dewar flask (1) and accordingly approaches room temperature.

2. Equipment according to claim 1, characterised thereby that the metal walls (9) consists of a thin sheet metal, preferably in a thickness of 0.2 mm to 1 mm.

3. Equipment according to claim 2, characterised thereby that the sheet metal is a high-grade steel sheet.

4. Equipment according to one of claims 1 to 3, characterised thereby that the height of the metal wall (9) amounts to at least 100 mm.

5. Equipment according to one of claims 1 to 9, characterised thereby that the metallic part (8) has an opening, which is vacuum-tightly closable by a cover (32) and preferably with a metal ring seal (33), for refilling or exchanging of drying means (31).

6. Equipment according to one of claims 1 to 5, characterised thereby that the ring (10) has at least one vacuum connection (14) for connection of commercially available vacuum components, wherein the opening at the upper side of the ring (10) is vacuum-tightly closable preferably by a commercially available 0-ring (18) in conjunction with a cover (19).

7. Equipment according to one of claims 1 to 6, characterised thereby that a plate (35 of metal which has good thermal conductivity is provided for reception of the frozen samples (37), which plate is thermostatically heatable by means of a heating cartridge (38) as well as a temperature sensor (39) and has at least one trough (36) at its upper side for reception and embedding of the samples (37) and is connected with the metallic part (8) in such a manner that a high thermal resistance results between the plate (35) and the metallic part (8) when the drying chamber (34) is evacuated.

8. Equipment according to claim 7, characterised thereby that the connection between the metallic part (8) and the sample plate (35) is effected by way of tip supports (40).

9. Equipment according to claim 7, characterised thereby that the connection between the metallic part (8) and the sample plate (35) is effected by way of balls with low thermal conduction capability (41), for example glass balls, which each have a line contact with the edges of receiving bores in the metallic part (8) and the sample plate (35).

10. Equipment according to one of claims 1 to 9, characterised thereby that metal parts (44) with good thermal conduction capability and at least one planar contact surface are fastenable at the upper side of the metallic part (8), which metal parts (44) have a good thermal contact with the metallic part (8) and, for introduction of the samples (37) into or removal from the troughs (36) of the sample plate (35), are either pivotable away about the axes of the fastening elements (42, 43) or removable after release of the fastening elements (42, 43).

11. Equipment according to one of claims 1 to 10, characterised thereby that the drying chamber (34) is so fastenable by fastening elements (23, 24) to the Dewar flask (1) or to a stationary mounting element (ring 4) connected with the Dewar (1) that a force-locking contact between the corresponding surfaces (25 and 7) at the metallic part (8) and at the body (6) is always guaranteed independently of the manipulation forces usually arising in operation.

12. Equipment according to claim 1, characterised thereby that the valve (47/48) is disposed in the drying chamber (34) and a thin-walled tube (49) of a material of low thermal conductivity, preferably a high-grade steel tube with a wall thickness of less than 0.5 mm, is disposed between the valve seat (47) and the upper side of the metallic part (8) in connection to the connector in the form of a connecting channel (45), and that the valve seat (47) is thermally connected with the ring (10) by a metal part (50) of good thermal conductivity.

13. Equipment according to claim 12, characterised thereby that the valve (47/48) is constructed by way of a spring element (51) as an excess-pressure valve, which opens automatically in the case of an excess pressure in the drying means chamber (30) by the drying means (31).

14. Equipment according to one of claims 1 to 13, characterised thereby that a valve (53/54) is provided, which connects the drying chamber (34) with the interior space of the Dewar flask (1) by way of pipe duct (52, 29).

15. Equipment according to claim 14, characterised thereby that that portion (52) of the pipe duct which extends in the drying chamber (34) consists of a thin-walled tube of low thermal conductivity, preferably of a high-grade steel tube with a wall thickness of less than 0.5 mm, which is vacuum-tightly connected with the metallic part (8), and that the valve seat (53) is thermally connected with the ring (10) by a metal part (50') of good thermal conductivity.

16. Equipment according to one of claims 1 to 15, characterised thereby that the closure cover (19) consists of a transparent material.

17. Equipment according to one of claims 1 to 16, characterised thereby that the closure cover (19) has a high permeability for ultraviolet rays.

18. Equipment according to one of claims 1 to 17, characterised thereby that an ultraviolet radiator (20 to 22, 22') is placeable on the ring (10).

19. Equipment according to one of claims 1 to 18, characterised thereby that the ring (10) is constructed, by means of a heating cartridge (58) and a temperature sensor (57), to be thermostatically heatable.

## Revendications

1. Système pour la lyophilisation par sorption cryogénique avec un refroidissement par de l'azote liquide (2), qui se trouve dans vase Dewar (1), avec un dessiccateur (31) et avec une chambre de séchage (34) pour la réception d'un échantillon (37), la paroi externe de la chambre de séchage (34) se composant d'une paroi en métal et la chambre de séchage (34) étant configurée en étant obturable de façon étanche au vide par une bague (10),
caractérisé en ce que
la chambre de séchage (34) est agencée pour la plus grande partie dans le goulot du vase Dewar (1) et le bord inférieur de la paroi en métal (9) est relié de façon étanche au vide avec le bord inférieur d'une pièce métallique (8) et le dessous de la pièce métallique (8) présente une surface de contact (25) qui est reliée à un corps conducteur de chaleur (6) baignant dans l'azote liquide, la pièce métallique (8) est ainsi refroidie par le corps conducteur de chaleur (6) et la pièce métallique (8) présente une chambre du dessiccateur (30) pour la réception du dessiccateur (31) pour la sorption cryogénique, par exemple un tamis moléculaire, ainsi qu'un canal de liaison (45) pouvant être ouvert et fermé par une soupape (47/48) vers la chambre de séchage (34),
et le bord supérieur de la paroi métallique (9) avec la bague (10), se trouve en dehors du vase Dewar (1) et par conséquent presqu'à température ambiante.

2. Système selon la revendication 1, caractérisé en ce que la paroi métallique (9) se compose d'une tôle mince, avantageusement d'une épaisseur de 0,2 mm jusqu'à 1 mm.

3. Système selon la revendication 2, caractérisé en ce que la tôle est une tôle en acier noble.

4. Système selon l'une des revendications 1 à 3, caractérisé en ce que la hauteur de la paroi métallique (9) est d'au moins 100 mm.

5. Système selon l'une des revendications 1 à 4, caractérisé en ce que la pièce métallique (8) présente une ouverture pouvant être obturée de façon étanche au vide par un couvercle (32), avantageusement avec une étanchéité en une bague métallique (33), pour le post-remplissage ou l'échange du dessiccateur (31).

6. Système selon l'une des revendications 1 à 5, caractérisé en ce que la bague (10) présente au moins un raccordement au vide (14) pour le raccordement d'éléments à vide du commerce, l'ouverture pouvant être obturée de façon étanche au vide au côté supérieur de la bague (10), avantageusement par un joint torique (18) du commerce, en liaison avec un couvercle (19).

7. Système selon l'une des revendications 1 à 6, caractérisé en ce que pour la réception des échantillons congelés (37), un plateau (35) en un métal bon conducteur de la chaleur est prévu qui peut être chauffé thermostatiquement au moyen d'une cartouche chauffante (38) ainsi qu'un capteur de température (39) et présente, pour la réception et l'enfouissement des échantillons (37) à son côté supérieur, au moins une cavité (36) et est relié avec la pièce métallique (8) de manière qu'entre le plateau (35) et la pièce métallique (8) il y ait lorsque la chambre de séchage (34) est évacuée, une haute résistance thermique.

8. Système selon la revendication 7, caractérisé en ce que la liaison entre la pièce métallique (8) et le plateau (35) pour les échantillons se produit au moyen de paliers à aiguilles (40).

9. Système selon la revendication 7, caractérisé en ce que la liaison entre la pièce métallique (8) et le plateau (35) pour les échantillons se produit au moyen de billes de faible conductibilité thermique (41), par exemples de billes en verre qui présentent, par rapport aux bords de perçages de réception dans la pièce métallique (8) et le plateau (35) d'échantillons, un contact linéaire.

10. Système selon l'une des revendications 1 à 9, caractérisé en ce que sur le côté supérieur de la pièce métallique (8) peuvent être fixées des pièces en métal (44) avec une bonne conductibilité thermique et au moins une surface plane de contact, qui présentent un bon contact thermique avec la pièce métallique (8) et peuvent être pivotées autour des axes des éléments de fixation (42, 43) pour les éloigner ou bien enlevées après avoir desserré les éléments de fixation (42, 43), pour introduire ou respectivement enlever les échantillons (37) des cavités (36) du plateau d'échantillons (35).

11. Système selon l'une des revendications 1 à 10, caractérisé en ce que la chambre de séchage (34) peut être fixée par des éléments de fixation (23, 24) au Dewar (1) ou à un élément de montage relié stationnaire au Dewar (1) (bague 4) de manière à toujours garantir, indépendamment des forces de manipulation se présentant pendant l'utilisation, un contact de force entre les surfaces correspondantes (25) et (7) sur la pièce métallique (8) ainsi que sur le corps (6).

12. Système selon la revendication 1, caractérisé en ce que la soupape (47/48) se trouve dans la chambre de séchage (34) et entre le siège de soupape (47) et le côté supérieur de la pièce métallique (8) en connexion avec la liaison sous la forme d'un canal de liaison (45) se trouve un tube à paroi mince (49) en un matériau à conduction faible de la chaleur, avantageusement un tube en acier noble avec une épaisseur de paroi de moins de 0,5 mm, et en ce que le siège de soupape (47) est relié thermiquement à la bague (10) par une pièce métallique (50) de bonne conduction à la chaleur.

13. Système selon la revendication 12, caractérisé en ce que la soupape (47/48) est configurée par un élément à ressort (51) en tant que soupape de surpression qui s'ouvre automatiquement lors d'une surpression dans la chambre du dessiccateur (30) avec le dessiccateur (31).

14. Système selon l'une des revendications 1 à 13, caractérisé en ce qu'une soupape (53/54) est prévue, qui relie la chambre de séchage (34), par une conduite tubulaire (52, 29), à l'espace interne du vase Dewar (1).

15. Système selon la revendication 14, caractérisé en ce que le segment (52) de la conduite tubulaire qui passe dans la chambre de séchage (34) se compose d'un tube à paroi mince de faible conduction de la chaleur, avantageusement d'un tube en acier noble avec une épaisseur de paroi de moins de 0,5 mm, qui est relié de façon étanche au vide avec la pièce métallique (8) et en ce que le siège de soupape (53) est relié thermiquement par une pièce en métal (50') de bonne conduction de la chaleur à la bague (10).

16. Système selon l'une des revendications 1 à 15, caractérisé en ce que le couvercle de fermeture (19) se compose d'un matériau transparent.

17. Système selon l'une des revendications 1 à 16, caractérisé en ce que le couvercle de fermeture (19) présente une haute transparence aux rayons UV.

18. Système selon l'une des revendications 1 à 17, caractérisé en ce qu'un émetteur de rayons UV (20 à 22, 22') peut être placé sur la bague (10).

19. Système selon l'une des revendications 1 à 18, caractérisé en ce que la bague (10) est configurée en pouvant être chauffée thermostatiquement au moyen d'une cartouche chauffante (58) et d'un capteur de température (57).
